Europäisches Patentamt

European Patent Office

Office européen des brevets

(19)

(11) Publication number: **0 001 539**
**B1**

(12) **EUROPEAN PATENT SPECIFICATION**

(45) Date of publication of patent specification: **23.12.81**

(51) Int. Cl.³: **D 21 D 3/00, C 04 B 43/00**

(21) Application number: **78850011.4**

(22) Date of filing: **13.09.78**

(54) **A method for the production of a fibrous mat or sheet.**

(30) Priority: **28.09.77 SE 7710857**

(43) Date of publication of application:
**18.04.79 Bulletin 79/8**

(45) Publication of the grant of the European patent:
**23.12.81 Bulletin 81/51**

(84) Designated Contracting States:
**BE CH DE FR GB NL SE**

(56) References cited:
**BE - A - 633 429**
**BE - A - 652 998**
**FR - A - 1 006 369**
**FR - A - 2 359 100**
**US - A - 2 721 504**

(73) Proprietor: **ROCKWOOL AKTIEBOLAGET**
**Fack 615**
**S-541 86 Skövde (SE)**

(72) Inventor: **Cederqvist, Gunnar**
**Björkvägen 7**
**Lerdala (SE)**

(74) Representative: **Avellan-Hultman, Bengt**
**Hultmans Patentbyra Aktiebolag Jungfrugatan 16**
**P.O. Box 5165**
**Stockholm 5 (SE)**

## A method for the production of a fibrous mat or sheet

The present invention relates to a method for the production of a fibrous mat or sheet, especially intended as a carrier or a support for a wall or floor construction of plastic, using as its starting material a mixture of an artificial mineral fibrous material and a cellulosic material. A suspension in water is thereafter prepared from these materials, whereupon it is dewatered, thereby shaping a mat or a sheet on a perforated band, also called a "wire", with subsequent pressing and drying.

Methods of the above-mentioned type have already been proposed. Tests made with these in part known methods have shown, however, that they have not achieved their purpose in all respects, which was to create a material for the above-mentioned use to be used as a substitute for the earlier commonly used material containing asbestos. As it has been found that the treatment of material containing asbestos is dangerous to health to a very high degree and that even the existence of such materials in a building may to some extent be detrimental to persons living in said building, it has therefore been assumed as important to create a substitute material which would possess all of the advantageous properties of the material earlier used but which should not possess any of its unfavourable properties.

Asbestos is a natural mineral fibre. It has an uneven surface having barblike extensions which cause, on the one hand, a good grip between the fibres in the asbestos sheet or plate but, on the other hand, the barblike extensions may easily get free from the formation of asbestos, something which happens especially during the production of the sheets or plates and when handling the ready-made mat or sheet, for instance by sawing or cutting it for the adaption of its shape to existing needs or during transport when particles may easily get free from the formation, and it is just these particles freely hovering in the air which, when breathed in, may cause especially severe body harm.

The above-mentioned methods have gone rather far in satisfying the desire to create mats or sheets or plates of artificial mineral wool with properties closely similar to the properties of the known asbestos mats or sheets, and this especially was a consequence of controlled intermixing of cellulosic fibres in the artificial mineral wool material. Such artificial mineral wool material may, for instance, be glass wool or slag wool or stone wool, the last-mentioned one usually called "rock wool". Such artificial mineral wool is obtained by spinning a melt of glass or slag or stone, preferably a mixture of different types of stones.

In one of the said methods attention has been drawn to the question of the resistance against moisture, heat and heat variations, as well as strength in the different directions in which the formation may be subjected to strains, and it has also proved possible to produce formations which proved to be comparable in the said respects with the older formations comprising asbestos.

Consideration was also given to the matter of depression resistance of the product in the form of a mat or sheet, and certain measurements of the depression resistance, made in the laboratory in connection with the present invention, have also been obtained. By the conception "depression resistance" in this connection is meant the power of the said product to resume its initial shape when the load causing the depression is released.

These tests have indicated that even if one could rather successfully control the demand for given properties of rigidity in the said produced product, this was, nevertheless, not the case regarding the depression resistance. In this connection, however, it should be observed that in the test thus made, no consideration was given to the moment in which the binder was fed to the dried fibrous mat or sheet, and this has resulted in the continuous investigations which matured into the present invention. At these continuous investigations it was found that an especially essential improvement of the depression resistance may be achieved if the binder is added to the fibrous mat or sheet in part in the form of a latex emulsion, in part by adding this emulsion only at a time after the fibrous mat or sheet has been pre-dried to a given extent. Subsequently it is thoroughly dried. The extent to which the pre-drying should take place has proved to be between 60 and 90% of weight of the dry contents, preferably about 80%. With such a treatment, as a matter of fact, one will get a depression resistance which is as close to complete as one could reasonably expect, the depression recovering to such an extent that only some few percent of the created impression will remain.

The invention, thus, relates to a method for the production of a fibrous mat or sheet especially intended as a carrier or a support for wall or floor covers, starting from a mixture of artificial mineral fibres and cellulose fibres, and perhaps also other constituents as mentioned below, from which a suspension in water is prepared, this suspension thereafter being dewatered on a perforated band or a wire during reshaping into mat or sheet form, and then the mat or sheet is pressed and dried.

According to the invention, a binder is fed to the fibrous mat in the form of a latex emulsion after the mat has been pre-dried to between 60 and 90% by weight of the dry contents, preferably about 80%, and only thereafter is the final drying executed.

It may be suitable to add some different media to the suspension. Amongst such media may be mentioned pre-binders, for instance, in the form of an acrylate whereby it will be more easy to treat the still wet fibrous mat, or filler means, dye stuffs, thickening means, anti-foaming agents, frothing agents and so on.

According to an especially advantageous form of execution of the said method, the fibrous mat is brought to pass through a horizontal press comprising at least two pressure rollers having horizontal shafts which are applied at the same level of height, between which the fibrous mat is brought to pass from the upper side and downwardly. This arrangement is provided with a means for feeding the latex emulsion onto both sides of the fibrous mat.

Between the pressure rollers the fibrous mat may be compressed thereby reducing its thickness by between 25 and 60%, preferably about 50%.

The latex emulsion binder preferably is added in such a quantity that the amount of binder in the completely dried mat-formed or sheet-formed product emanating from the latex emulsion will be between 15 and 30 percent of weight, preferably about 25%, all of which is to be counted on the weight of the fibrous mat or sheet, and thereby the latex emulsion may possess a content of dry material of between 30 and 50% of weight, preferably about 40%.

The latex emulsion, which is, in this case, added after the above-mentioned pre-drying, preferably is a styrene-butadiene-latex, and, accordingly, preference is also given to such a latex of the heat-reactive type so that it will be brought to bind by means of the heat added for the subsequent complete drying of the mat or sheet.

The starting material of artificial mineral fibres and cellulosic fibres used may comprise at least half of such mineral fibres, preferably, however, a little more, e.g. 55%, and the artificial mineral fibres may have a mean diameter of between 3 and 6 micrometers. The cellulosic fibrous material which may in a way known *per se* be a mixture of long fibrous cellulose and short fibrous cellulose, so-called "zero fibres", advantageously may be unbleached sulphate pulp mass. At least half of the cellulose material may be composed of such unbleached sulphate pulp mass, and of the cellulosic fibrous material about half, preferably about 45% may be either zero fibres or ground short fibrous waste material, the grinding rate of such a short fibrous part of the cellulosic material being the one obtained when the coarseness of this material is between 65° and 70° SR, provided that the material is unbleached sulphate pulp mass or between 36° and 45° SR, preferably about 40° SR provided that the material is ground waste fibrous material.

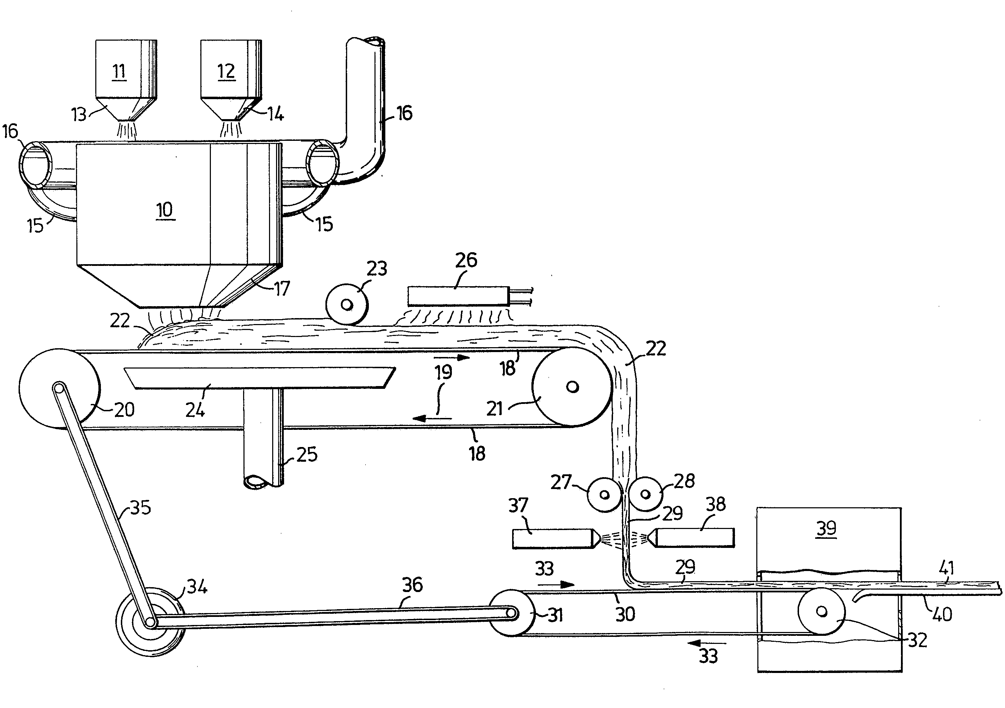

The attached drawing shows an arrangement for the execution of the method according to the above.

In the drawing, a mixer 10 is provided to be fed from the separate containers 11 and 12, each being provided *per se* with a controllable sluice 13 and 14, resp., the one 11 of said containers containing artificial mineral fibres and the other one 12 containing cellulosic fibres. The mixer 10 is provided with a number of feeder tubes 15 for water and perhaps for a perparatory binder for the preparation of an aqueous emulsion. Water and the binder, which may be used, are fed from a conduit 16. At the lower end of the mixer 10 a sluice 17 is provided for letting out the emulsion prepared in the mixer onto a perforated band 18, a so called wire, moving in the direction of the arrows 19 over a driver roller 20 and an idle roller 21. Above the branch of the said perforated band or wire 18 carrying the deposited emulsion mass 22 in the form of a porous mat, which is thereafter compressed to form a sheet of board, firstly a dewatering roller 23 with its collection trough with outlet 24 into a waste conduit 25 is provided, and, secondly, an electric radiation element 26 is provided for preparatory drying of the mat deposited on the perforated moveable band or wire in accordance with the above.

Over a roller 12 the mat is then conducted downwardly to a press comprising two rollers 27 and 28. In reality, such a press usually comprises more than one single pair of rollers, but for simplification, in this case, the press has been shown to comprise only two rollers. In this way, the mat 22 is compressed to a considerably less thickness in the form of the mat or sheet 29, which is deviated to follow a second moving band 30, driven by the roller 31 and running idly over the roller 32 in the direction of the two arrows 33.

The two driver rollers 20 and 31 for the moveable band or wire and also for the band 30, resp., are driven in common by a motor 34 over the belt transmissions 35 and 36, resp.

On each side of the mat or sheet 39, now freely hanging down, a shower device 37 and 38 is provided to feed a latex emulsion. In this state, i.e. impregnated with the latex emulsion the mat or sheet 29 will be deposited on said second band 30, by means of which it is brought to a drying oven 39 for final drying. After the mat or sheet has got, in this way, a more solid sheet-shaped consistency, it is no longer necessary to carry it up by means of the band 30, and it is, therefore, transferred to the outfeed table 40, on which the ready made sheet 41 is fed out.

**Claims**

1. A method for the production of a fibrous mat or sheet (29), especially intended to be used as a carrier or a support for wall and floor covers, starting from a mixture of artificial mineral fibres (11) and cellulosic fibres (12) from which a suspension in water is prepared, said suspension being dewatered during formation of a mat on a moveable band or wire (18), and said mat thereafter being pressed and dried, characterized thereby, that a binding agent is fed to the fibrous mat (22) in the form of a latex emulsion, after said mat has been pre-dried to between 60% and 90% of dry contents, preferably about 80%, final drying thereafter being executed.

2. A method according to claim 1, characterized thereby, that the fibrous mat (22) is also provided with a binder agent in the form of, for instance, an acrylate, which is fed to the suspension before its deposition in the form of a fibrous mat (22) on the moveable band or wire (18).

3. A method according to claim 1 or 2, characterized thereby, that selected additions are fed to the fibrous mat (22) such as fillers, dyeing stuffs, foaming or anti-foaming agents, said additions being fed to the suspension used for forming said mat.

4. A method according to any of the above claims, characterized thereby, that the fibrous mat (22) is brought to pass through a horizontal press, comprising at least two co-operating rollers (27, 28) having horizontal shafts and being applied at same level of height between which the fibrous mat (22) is brought to pass from above downwardly.

5. A method according to any of the above claims, characterized thereby, that feeder devices (37, 38) are provided, one on each side of the fibrous mat (22), and used for adding the latex emulsion, preferably in the form of showers.

6. A method according to claim 4 or claim 4 in combination with claim 5, characterized thereby, that the fibrous mat (22) is compressed between pressure rollers (27, 28) thereby decreasing its thickness by between 25 and 60%, preferably about 50%.

7. A method according to any of the above claims, characterized thereby, that the latex emulsion is added in such an amount that, in the finally dried product in the form of the sheet (41), the amount of binder emanating from the latex emulsion will form between 15 and 30%, preferably about 25% of the weight of the sheet.

8. A method according to claim 7, characterized thereby, that the latex emulsion has a content of dry substance of between 30 and 50%, preferably about 40%.

9. A method according to any of the above claims, characterized thereby, that the latex emulsion is made on the basis of a styrene-butadiene-latex, said emulsion preferably being of the heat-reactive type so that it will be brought to bind by means of the feed of heat taking place in order of finally drying the mat to form the sheet (29).

10. A method according to any of the above claims, characterized thereby, that the fibrous mat or sheet is reinforced by comprising at least half of mineral fibres (11), preferably however, a little more, e.g. 55%.

11. A method according to claim 10, characterized thereby, that the artificial mineral fibres have a mean diameter of between 3 and 6 micrometers.

12. A method according to any of the above claims, characterized thereby, that the fibrous cellulosic material is a mixture of longer fibrous cellulose and much shorter fibrous cellulose, so-called zero fibres, said mixture being mixed with artificial mineral fibres.

13. A method according to claim 12, characterized thereby, that the cellulosic fibrous material is composed at least in part of unbleached sulphate cellulose.

14. A method according to claim 13, characterized thereby, that about half of the total quantity of the cellulosic fibrous material is unbleached sulphate cellulose.

15. A method according to any of the claims 12—14, characterized thereby, that about half, preferably about 45%, of the cellulosic fibrous material is essentially shorter than the remaining cellulosic fibrous material, said first mentioned cellulosic fibrous material preferably comprising zero fibres or waste cellulosic material ground to a dimension corresponding to that of zero fibres.

16. A method according to claim 15, characterized thereby, that the ground shorter fibrous cellulosic material of unbleached sulphate cellulose has a coarseness of between 65° and 75° SR, preferably about 70° SR.

17. A method according to claim 15, characterized thereby, that the zero fibrous cellulosic material derived by grinding waste cellulosic fibres has a coarseness of between 36° SR and 45° SR.

**Patentansprüche**

1. Verfahren zur Herstellung einer Fasermatte oder -platte, insbesondere zur Verwendung als Träger oder Unterlage für Wand- und Fußbodenbeläge, bei dem von einer Mischung von künstlichen Mineralfasern (11) und Zellulosefasern (12) ausgegangen wird, von der eine Suspension in Wasser vorbereitet wird, die anschließend unter Bildung einer Matte auf einem beweglichem Band oder Gitterband (18) entwässert wird, dadurch gekennzeichnet, daß der Fasermatte (22) ein Bindemittel in Form einer Latexemulsion zugeführt wird, nachdem die Matte auf einen Anteil zwischen 60% und 90%, vorzugsweise von etwa 80%, Trockensubstanz am Gesamtgewicht vorgetrocknet ist, und daß anschließend die endgültige Trocknung erfolgt.

2. Verfahren nach Anspruch 1, dadurch gekennzeichnet, daß die Fasermatte (22) außerdem mit einem Bindemittel in der Form von beispielsweise einem Acrylat (Salz der Acrylsäure) versehen wird, das der Suspension noch vor deren Ablage in Form einer Fasermatte (22) auf dem beweglichen Band oder
Gitterband (18) zugeführt wird.

3. Verfahren nach Anspruch 1 oder 2, dadurch gekennzeichnet, daß der zur Bildung der
Fasermatte (22) bestimmten Suspension ausgewählte Zusätze, wie Füllstoffe, Farbstoffe,
schaumbildende oder schaumverhindernde
Zusätze zugesetzt werden.

4. Verfahren nach einem der vorhergehenden Ansprüche, dadurch gekennzeichnet,
daß die Fasermatte (22) durch eine
waagerechte Presse bewegt wird, die
mindestens zwei in gleicher Höhe angeordnete
zusammenwirkende Walzen (27, 28) mit
waagerechten Achsen aufweist, zwischen
denen die Fasermatte (22) von oben nach unten
hindurchbewegt wird.

5. Verfahren nach einem der vorhergehenden Ansprüche, dadurch gekennzeichnet,
daß beiderseits der Fasermatte (22) Vorrichtungen (37, 38), vorzugsweise in Form von
Brausevorrichtungen, zum Zusetzen der Latexemulsion vorgesehen sind.

6. Verfahren nach Anspruch 4 oder nach den
Ansprüchen 4 und 5, dadurch gekennzeichnet,
daß die Fasermatte (22) zwischen den Walzen
(27, 28) zusammengepreßt und dadurch ihre
Dicke auf zwischen 25 und 60%, vorzugsweise
etwa 50%, verringert wird.

7. Verfahren nach einem der vor-
hergehenden Ansprüche, dadurch gekenn-
zeichnet, daß die Latexemulsion in solcher
Menge zugesetzt wird, daß in dem fertig getrockneten Produkt in Form einer Platte (41) der
Anteil an aus der Latexemulsion gebildetem
Bindemittel zwischen 15 und 30%, vorzugsweise etwa 25%, des Plattengewichtes beträgt.

8. Verfahren nach Anspruch 7, dadurch
gekennzeichnet, daß die Latexemulsion einen
Gehalt an Trockensubstanz zwischen 30 und
50%, vorzugsweise etwa 40%, aufweist.

9. Verfahren nach einem der vorhergehenden Ansprüche, dadurch gekennzeichnet,
daß die Latexemulsion auf der Basis eines
Styrol-Butadien-Latex hergestellt und vorzugsweise wärmereaktiv ist, so daß sie mittels der
zum endgültigen Trocknen der Matte in die
Form der Platte (29) zugeführten Wärme zum
Binden gebracht wird.

10. Verfahren nach einem der vorhergehenden Ansprüche, dadurch gekennzeichnet,
daß die Fasermatte oder -platte durch einen
Gehalt von mindestens 50%, vorzugsweise
jedoch etwas mehr, beispielsweise 55%, an
Mineralfasern (11) verstärkt ist.

11. Verfahren nach Anspruch 10, dadurch
gekennzeichnet, daß die künstlichen Mineralfasern einen hauptsächlichen Durchmesser von
zwischen 3 und 6 Mikrometern aufweisen.

12. Verfahren nach einem der vorhergehenden Ansprüche, dadurch gekennzeichnet,
daß das Zellulosefasermaterial eine Mischung
von langfaseriger Zellulose und wesentlich kurzfaserigerer Zellulose, sogen. Nullfasern ist, und
daß diese Mischung mit künstlichen Mineralfasern gemischt ist.

13. Verfahren nach Anspruch 12, dadurch
gekennzeichnet, daß das Zellulosefasermaterial
zumindest teilweise aus ungebleichter Sulfatzellulose besteht.

14. Verfahren nach Anspruch 13, dadurch
gekennzeichnet, daß etwa die Hälfte der ganzen
Menge an Zellulosefasermaterial ungebleichte
Sulfatzellulose ist.

15. Verfahren nach einem der Ansprüche 12
bis 14, dadurch gekennzeichnet, daß etwa die
Hälfte, vorzugsweise jedoch etwa 45%, des
Zellulosefasermaterials wesentlich kürzere
Fasern als das restliche Zellulosefasermaterial
aufweist, wobei das erstgenannte Zellulosefasermaterial vorzugsweise Nullfasern oder
Abfallzellulosematerial aufweist, das auf eine
der Abmessung von Nullfasern entsprechende
Dimension gemahlen ist.

16. Verfahren nach Anspruch 15, dadurch
gekennzeichnet, daß das gemahlene kürzere
Zellulosefasermaterial aus ungebleichter Sulfatzellulose eine Rauhheit von zwischen 65° und
75° SR, vorzugsweise von etwa 70° SR, aufweist.

17. Verfahren nach Anspruch 15, dadurch
gekennzeichnet, daß das durch Mahlen von
Abfall-Zellulosefasern gewonnene Nullfaser-
Zellulosematerial eine Rauhheit von zwischen
36° SR und 45° SR aufweist.

**Revendications**

1. Procédé de production d'une nappe (mat)
ou feuille (29) de fibres convenant spécialement comme âme ou support pour des revêtements de sol et de mur à partir d'un mélange de
fibres minérales artificielles (11) et de fibres
cellulosiques (12) suivant lequel on prépare une
suspension aqueuse, puis on égoutte la suspension en formant une nappe ou feuille sur une
bande perforée ou table de fabrication (18)
mobile, après quoi on presse et on sèche la
nappe ou feuille, caractérisé en ce qu'on ajoute
un liant à la nappe de fibres (22) sous la forme
d'un latex après avoir préséché la nappe
jusqu'à une teneur en matière sèche de 60 à
90% et de préférence d'environ 80% en poids,
après quoi on exécute le séchage final.

2. Procédé suivant la revendication 1, caractérisé en ce qu'on incorpore à la nappe de fibres
(22) également un liant sous forme, par
exemple, d'un acrylate qu'on ajoute à la suspension avant de la déposer sous la forme d'une
nappe de fibres (22) sur la bande perforée ou
table de fabrication mobile (18).

3. Procédé suivant la revendication 1 ou 2,
caractérisé en ce qu'on incorpore à la nappe de
fibres (22) des additifs choisis tels que des
charges, colorants, agents moussants ou agents
antimousses, les additifs étant ajoutés à la suspension servant à former la nappe.

4. Procédé suivant l'une quelconque des revendications précédentes, caractérisé en ce qu'on fait passer la nappe de fibres (22) dans un presse horizontale comprenant au moins deux cylindres coopérants (27, 28) qui sont montés sur des arbres horizontaux agencés à la même hauteur et entre lesquels la nappe de fibres (22) passe de haut en bas.

5. Procédé suivant l'une quelconque des revendications précédentes, caractérisé en ce que des dispositifs de débit (37, 38) qui sont de préférence des becs de pulvérisation, sont agencés de part et d'autre de la nappe de fibres (22) et utilisés pour appliquer le latex.

6. Procédé suivant la revendication 4 ou la revendication 4 en combinaison avec la revendication 5, caractérisé en ce qu'on comprime la nappe de fibres (22) entre les cylindres de pression (27, 28) de manière à diminuer son épaisseur de 25 à 60% et de préférence d'environ 50%.

7. Procédé suivant l'une quelconque des revendications précédentes, caractérisé en ce qu'on ajoute le latex en quantité telle que dans le produit séché final obtenu sous forme de feuille (41), la quantité de liant apportée par le latex soit de 15 à 30% et de préférence d'environ 25% du poids de la feuille.

8. Procédé suivant la revendication 7, caractérisé en ce que le latex a une teneur en matière sèche de 30 à 50% et de préférence d'environ 40%.

9. Procédé suivant l'une quelconque des revendications précédentes, caractérisé en ce que le latex est à base d'un polymère de styrène et de butadiène et est de préférence du type réactif à chaud afin qu'il puisse être amené à faire prise en raison de l'apport de chaleur effectué en vue du séchage final de la nappe (29) en une feuille (41).

10. Procédé suivant l'une quelconque des revendications précédentes, caractérisé en ce que la nappe ou feuille de fibres est renforcée par la présence d'au moins 50% de fibres minérales (11), dont la quantité est toutefois de préférence un peu supérieure, par exemple de 55%.

11. Procédé suivant la revendication 10, caractérisé en ce que les fibres minérales artificielles ont un diamètre moyen de 3 à 6 microns.

12. Procédé suivant l'une quelconque des revendications précédentes, caractérisé en ce que la matière cellulosique fibreuse est un mélange de fibres de cellulose longues et de fibres de cellulose beaucoup plus courtes, dites fibres numéro zéro, lequel mélange se trouve mélangé avec les fibres minérales artificielles.

13. Procédé suivant la revendication 12, caractérisé en ce que la matière cellulosique fibreuse est composée au moins pour partie de pâte de cellulose au sulfate non blanchie.

14. Procédé suivant la revendication 13, caractérisé en ce que la matière cellulosique fibreuse est formée pour environ la moitié de sa quantité totale par de la pâte de cellulose au sulfate non blanchie.

15. Procédé suivant l'une quelconque des revendications 12 à 14, caractérisé en ce que la matière cellulosique fibreuse est formée pour environ la moitié et de préférence environ 45% de sa quantité totale par des fibres sensiblement plus courtes que celles du reste de la matière cellulosique fibreuse, la première matière cellulosique citée comprenant de préférence des fibres numéro zéro ou des fibres cellulosiques récupérées raffinées jusqu'à une dimension correspondant à celle des fibres numéro zéro.

16. Procédé suivant la revendication 15, caractérisé en ce que la matière cellulosique fibreuse courte raffinée de la pâte de cellulose au sulfate non blanchie a une finesse de 65 à 75° SR et de préférence d'environ 70° SR.

17. Procédé suivant la revendication 15, caractérisé en ce que la matière cellulosique fibreuse numéro zéro obtenue par raffinage de fibres cellulosiques récupérées a une finesse de 36 à 45° SR.

0 001 539